# EUROPÄISCHE PATENTSCHRIFT

(11) **EP 1 617 186 B1**
(45) Veröffentlichungstag und Bekanntmachung des Hinweises auf die Patenterteilung: **07.04.2010**
(21) Anmeldenummer: 05106368.3
(22) Anmeldetag: 12.07.2005
(51) Int. Cl.: G01F 11/24, G01F 15/12

(54) **Portioniervorrichtung**
Portioning device
Dispositif de dosage

(30) Priorität: 13.07.2004 DE 102004033832; 11.05.2005 DE 102005021838
(43) Veröffentlichungstag der Anmeldung: 18.01.2006
(73) Patentinhaber: Völkl, Thomas, 83052 Bruckmühl (DE)
(72) Erfinder: Völkl, Thomas, 83052 Bruckmühl (DE)
(74) Vertreter: Vogeser, Werner

(56) Entgegenhaltungen:
- GB-A- 683 842
- GB-A- 988 059
- US-A- 2 903 024
- US-A- 3 263 866

## Beschreibung

### I. Anwendungsgebiet

Die Erfindung betrifft eine Portioniervorrichtung zum Portionieren eines Schüttgutes in immer gleiche Teilvolumina.

### II. Technischer Hintergrund

Derartige Portioniervorrichtungen für gleichmäßige Schüttgüter, also Schüttgüter, deren Partikel jeweils gleich große und gleich schwere und insbesondere auch etwa gleich geformte Partikel aufweisen, sind vielfach bekannt.

Dabei wird ein Messvolumen mit Schüttgut gefüllt, das Messvolumen abgeschlossen und dieses so erzeugte Teilvolumen anschließend ausgegeben.

Eine typische Form eines solchen Volumen-Portionierers für gleichmäßige Schüttgüter ist zum Beispiel eine Portionier-Schublade oder auch eine Zellradschleuse, bei der das Messvolumen in über den Umfang verteilt gleichmäßig angeordneten einzelnen Durchgangsöffnungen eines Zellrades besteht, welches - typischerweise um eine vertikale Achse drehend - zwischen einer oberen und einer unteren, dicht an dem Zellrad anliegenden, Deckplatte drehbar ist.

An einer Drehposition befindet sich dabei in der oberen Deckplatte eine Zulauföffnung, meist in Größe und Form einer Radzelle, die mit einem über der Zellradschleuse angeordneten Vorratsbehälter für das Schüttgut in Verbindung steht. Aufgrund der Schwerkraft läuft das Schüttgut durch diese Zulauföffnung in die darunter befindliche Radzelle und füllt diese vollständig.

Durch Weiterdrehen des Zellrades gelangt die gefüllte Radzelle vollständig unter den geschlossenen Bereich der oberen Deckplatte und erreicht dann eine analoge Auslauföffnung in der unteren Deckplatte, durch welche das abgetrennte Teilvolumen abgegeben wird. Die untere Auslauföffnung muss sich ebenfalls noch im Bereich des geschlossenen Teils der oberen Deckplatte befinden, die somit eine Winkelerstreckung von wenigstens ca. zwei benachbarten Radzellen abdecken muss.

Das Problem ist, dass gleiche Volumina nur dann mittels einer solchen Zellradschleuse erzielt werden, wenn die Packungsdichte der Schüttgutpartikel in dem Messvolumen, also der Radzelle, immer gleich ist. Dies ist trotz des übereinstimmenden Volumens der einzelnen Radzellen des Zellrades dann nicht gegeben, wenn beispielsweise die Partikel des Schüttgutes unterschiedlich groß, unterschiedlich schwer oder stark unterschiedlich geformt sind oder nicht besonders klein im Vergleich zu Zulauf- und Ablauföffnung der Radzelle sind.

Diese Probleme treten beispielsweise beim Portionieren von getrockneten Tees auf.

Getrockneter Tee an sich ist von der Partikelform her bereits meist leicht faserförmig, da es Tees gibt, die so geschnitten sind, dass die Längserstreckung des einzelnen Partikels teilweise das 10- bis 40-fache der Quererstreckung beträgt. Solche faserförmigen Partikel verhaken sich sehr leicht ineinander, so dass die sich ergebende Packungsdichte stark unterschiedlich sein kann.

Das Problem wird verschärft, wenn - zum Beispiel abhängig von der jeweiligen Teesorte - diese Partikelform von annähernd kubisch bis zu faserförmig wechselt.

Erst Recht gilt dies für gemischte Teesorten, beispielsweise gemischte Früchtetees, bei denen die unterschiedlichsten Partikelformen und -größen durcheinander vorliegen, oder gar bei Tees, die mit Fruchtstücken angereichert sind. So gibt es beispielsweise Teesorten, deren Hauptbestandteil Schwarztee mit faserförmigen Partikeln von 0,5 mm Dicke und 5 mm Länge ist, wobei sich jedoch dazwischen getrocknete Bananenscheiben mit dem 50-fachen Gewicht und einer Größe von bis zu 0,5 x 1,0 cm Größe und kubischer oder plattenförmiger Gestalt befinden.

Wenn solche Tees in Einzelportionen für das Aufbrühen einer einzigen Tasse von Tee portioniert werden sollen, kann es vorkommen, dass das herzustellende Teilvolumen nur ein geringes Mehrfaches des Volumens des größten Einzelpartikels ausmacht.

Bei einer normalen Zellradschleuse würde ein solches Partikel, welches sich beim Verschließen der Radzelle im Wirkungsbereich der oberen Deckplatte befindet, entweder in die Radzelle hineingedrückt werden und damit den übrigen Inhalt dort unzulässig stark verdichten oder nach außen gedrückt werden und damit eine unzureichende, nur teilweise Füllung der Radzelle hervorrufen.

Desweiteren soll wegen des Handbetriebes das Portionieren, also das Drehen der Zellradschleuse auch bei sich dazwischen verklemmenden Partikeln mit moderater Handkraft und kurzer Hebellänge realisierbar sein.

Ein weiteres Problem ist, dass das ungleichmäßige Schüttgut im Vorratsbehälter dazu tendiert, sich zu entmischen, indem die Partikel mit höherem spezifischem Gewicht und einer Form näher an der Kugelform schneller absinken als die übrigen Partikel.

Ein weiteres Problem besteht darin, dass die Gefahr von Brückenbildungen im Schüttgut im Vorratsbehälter oberhalb des Zulaufes zur Zellradschleuse umso größer ist, je stärker die Form der Partikel von der idealen Kugelform abweicht und je größer die Haftreibung zwischen den einzelnen Partikeln ist, z.B. aufgrund vorhandener Restfeuchtigkeit etc., weshalb unter anderem das Eindringen von Feuchtigkeit in den Vorratsbehälter verhindert werden muss.

In diesem inne zeigt die US 3263866 bereits einen Portionierer mit Zellradschleuse mit verticaler Rotationsachse, die mittels einer Schneide Partikel abscheren kann und das Portioniergut im Vorratsbehälter durch ein Rührwerk durchmischt.

Die US 683 842 zeigt einen Portionierer mit Zellradschleuse mit horizontaler Rotationsachse.

### III. Darstellung der Erfindung

### a) Technische Aufgabe

Es ist daher die Aufgabe gemäß der Erfindung, eine Portioniervorrichtung zu schaffen, die auch schwierige, ungleichmäßige Schüttgüter, insbesondere Tee, in sehr kleine Teilportionen relativ zur Partikelgröße zuverlässig und bei möglichst gleich bleibender Durchmischung des Schüttgutes portionieren kann.

### b) Lösung der Aufgabe

Diese Aufgabe wird durch die Merkmale der Ansprüche 1 und 7 gelöst. Vorteilhafte Ausführungsformen ergeben sich aus den Unteransprüchen.

Durch die Anordnung eines Portionier-Behälters zum Portionieren unmittelbar zwischen dem Vorratsbehälter und dem Auffanggefäß wird ein Hilfsmittel geschaffen, welches prinzipiell zur Behebung von Detailproblemen beim Portionieren geeignet ist.

Wenn der Portionier-Behälter eine Schublade ist, die quer zur Schwerkraftrichtung ausziehbar ist, ergibt sich eine sehr einfache Konstruktion, indem mittels Schwerkraft das Schüttgut in die obere Öffnung der Schublade fällt und diese füllt, in dieser Stellung jedoch die Schublade unten noch verschossen ist zum Beispiel durch eine untere Deckplatte, auf der die Schublade gleitet.

Eine solche Schublade ist nicht Teil der Erfindung.

Nach Herausziehen der Schublade, wodurch mittels des Schubladen-Körpers automatisch die Zulauföffnung in der oberen Deckplatte dicht verschlossen werden sollte, muss das in der Schublade aufgenommene Volumen entnommen werden, beispielsweise durch Drehen und Auskippen der Schublade.

Eine einfachere Lösung besteht darin, die Schublade mit einer Durchgangsöffnung von der oberen zu unteren Gleitfläche auszustatten.

Durch Verlagern der Schublade quer zur Schwerkraftrichtung, also zum Beispiel horizontal, wird die obere Einfüll-Öffnung der Schublade geschlossen, so dass ein Nachfüllen in das Volumen der Schublade hinein nicht mehr erfolgt, und anschließend durch zunehmende Fluchtung der unteren Öffnung der Schublade mit einer Auslauf-Öffnung in der unteren Deckplatte das Schüttgut die Schublade verlässt.

Um das Volumen der Schublade und damit die einzelnen Portionen hinsichtlich ihrer Größe verändern zu können, können verschiedene Schubladen verwendet werden, deren Außenabmessungen, insbesondere deren Höhe, gleich Ist, so dass sie gegeneinander ausgetauscht immer zwischen obere und untere Deckplatte eingesetzt werden können. Dabei kann die Größe der Ausnehmung in der Schublade, also zum Beispiel der Durchgangs-Öffnung der Schublade, variieren.

Eine andere Lösung besteht darin, dass ein Volumen der Schublade zu verändern, indem wenigstens eine der das innere Volumen der Schublade begrenzenden Seitenwände so verlagert wahr ist, dass sich dadurch das umschlossene Volumen in der Schublade verändert. Diese konstruktiv aufwändigere Lösung hat's den Vorteil, dass damit leichter eine stufenlose Veränderung des Volumens der Schublade möglich ist, und keine Teile, etwa Austausch-Schubladen, verloren gehen können.

Um auch faserige Bestandteile des Tees auf diese Art und Weise Portionieren zu können, müssen solche Partikel, die sich beim herausziehen der Schublade auf der Grenze zwischen dem Volumen der Schublade und der oberen Einfüllöffnung befinden, zuverlässig abgetrennt werden, was durch eine Schneide an der in Auszugsrichtung der Schublade entgegenstehenden vorderen Funktionskante der oberen Deckplatte geschehen kann oder auch durch an der Hinterkante des Schubladen-Volumens angeordnete Schneide.

Vorzugsweise ist die Schneide dabei in Form einer separaten Schneidklinge ausgebildet, die als auswechselbares Verschleißteil an dem entsprechenden, tragenden Grundkörper verschraubt ist.

Der Portionier-Behälter gemäss der Erfindung ist als Zellradschleuse ausgebildet.

Gemäss Anspruch 1 ist die Zellradschleuse mit ihrer Rotationsachse quer zur Schwerkraftrichtung und insbesondere horizontal ausgerichtet, so dass das Schüttgut in wenigstens eine radiale Einfüll-Öffnung der Zellenradschleuse hinein fällt.

Sobald das Zellrad so weit weiter gedreht ist, dass die Einfüll-Öffnung nach unten zeigt, fällt das im Zellrad aufgenommene Schüttgut durch eine Auslass-Offnung heraus, sobald diese mit der einzelnen Öffnung des Zellrades fluchtet. Zu diesem Zweck muss das Zellrad in einer Bohrung eines Zellradgehäuse eng umschlossen aufgenommen sein, in welchem die lass Öffnung vorgesehen ist.

Auch bei einem solchen, horizontal liegenden, Zellrad wird ein zu großes Partikel des Schüttgutes abgetrennt durch eine Schneide, die entweder an der hinteren Funktionskante der Einlauf-Öffnung des Zellradgehäuses oder der radialen Außenseite des Zellrades an der Hinterkante des Rad-Zelle angeordnet ist.

Die Schneide soll dabei möglichst spielfrei, also mit möglichst geringem Abstand, an der sich vorbeibewegenden Gegenkante entlang geführt werden.

Um dabei eine gerade und keine gebogene Schneide verwenden zu können, was von der Herstellung wesentlich kostengünstiger ist, um dennoch einen ziehenden Schnitt erreichen zu können, der mit geringerem Kraftaufwand auskommt, wird die Schneide entlang einer Mantellinie, also parallel zur Rotationsachse des Zellrades, entweder an der Hinterkante der Radzelle oder an der entsprechenden vorderen Gegenkante der Einfüllöffnung des umgebenden Zellrad-Gehäuses angeordnet. Um den ziehenden Schnitt zu realisieren, muss die entsprechende Gegenkante hierzu schräg, also zur Rotationsachse des Zellrades windschief, angeordnet sein.

Zu diesem Zweck können die gesamten Radzellen windschief zur Rotationsachse angeordnet sein. Die Radzellen können dabei entweder radial nach außen offene Ausfräsungen aufweisen oder in einem spitzen Winkel zur Rotationsachse verlaufend sein, oder auch aus einer etwa tangential gerichteten Durchgangs- oder Sacklochbohrung, die in die Mantelfläche des Zellrades hineingebracht ist. Insbesondere kann ein Zellrad nur zwei einander gegenüberliegende Radzellen aufweisen.

Trotz der liegenden Rotationsachse eines solchen Zellrades kann mit dem Zellrad eine Rührvorrichtung drehfest verbunden sein, die in den Vorratsbehälter hineinreicht und eine vertikal stehende Welle umfasst, von der Rührarme quer in das Schüttgut hinein abstehen, und beim Drehen des Zellrades ebenfalls in Drehung versetzt werden.

Bei dem Verfahren gemäss Anspruch 7 ist die Rotationsachse des Zellrades aufrecht, im wesentlichen vertikal, angeordnet. In diesem Fall sind die Radzellen als Durchgangsöffnungen ausgeführt, die von der oberen zur unteren Stirnfläche durchgehen. Die Radzellen können dabei radial nach außen offen oder auch geschlossen sein. Die radial geschlossene Form hat den Vorteil, dass das Zellrad nur an der oberen und unteren Stirnseite von dicht anliegenden Deckplatten abgedeckt sein muss, während bei radial nach außen offenen Zellen auch der radiale Umfang in einem dicht anliegenden Zellrad-Gehäuse umschlossen sein muss.

Zum Abtrennen großer Partikel ist wiederum eine Schneidkante vorgesehen.

Durch die Ausbildung der vorderen Funktionskante der oberen Deckplatte, die das Zellrad nach oben abdeckt, als Schneide, und zwar möglichst spielfrei auf der Oberseite des Zellrades anliegend, wird ein Abscheren von Partikeln zwischen Zellrad-Oberseite und der Schneide ermöglicht, so dass ein Teil des Partikels gemäß dem normalen Füllungsgrad in die Radzelle gelangt, der andere Teil des Partikels dagegen außen verbleibt.

Um die Schneidwirkung zu verbessern, sollte die Oberkante der rückwärtigen Zellwand nicht in Parallellage oder annähender Parallellage auf die Schneide treffen, sondern gegenüber der Schneide in axialer Richtung betrachtet schräg stehen bzw. eine andere Form haben als die Schneide, also z.B. bei einer gerade verlaufenden Schneide bogenförmig gekrümmt sein.

Ziel ist es, dass zwischen Schneide und Gegenschneide dabei ein ziehender Schnitt realisiert wird, dessen Schnittrichtung radial nach innen gerichtet ist, da die Schnittkraft aufgrund der sich verringernden Hebellänge umso größer wird, je weiter radial innen die Durchtrennung des Partikels erfolgt.

Unter anderem kann dies dadurch erreicht werden, dass die Schneide nicht exakt auf einer Radialen durch die Rotationsachse des Zellrades liegt, sondern davon versetzt, insbesondere parallel versetzt, nach hinten, also in Richtung des Weiterdrehens des Zellrades und der darauf vorhandenen, gegen die Schneide arbeitenden Gegenschneide.

Beim Weiterdrehen des Zellrades wandert dadurch der Überlappungspunkt von Schneide und dem rückwärtigen Zellenrand, welcher die Gegenschneide darstellt, in radialer Richtung insbesondere nach innen.

Wenn die gebogene Form eine konkave Ausbuchtung in der rückwärtigen Zellenwand ist, kann auch erreicht werden, dass der äußerste Punkt der rückwärtigen Zellwand die Schneide der Oberplatte bei Drehung des Zellrades früher erreicht als der tiefste Punkt der konkaven Ausbuchtung, und dadurch zwischen Schneide und Gegenschneide geratende Partikel nicht radial weiter nach außen gepresst werden, sondern radial weiter nach innen, insbesondere zur Mitte der Ausbuchtung hin, und dort zum Schluss zuverlässig durchtrennt werden, wegen u.a. der dort höheren Schneidkraft aufgrund der kürzeren Hebellänge.

Die obere Abdeckplatte auf der Oberseite des in der Regel horizontal umlaufenden Zellrades kann auch der Lagerung des Zellrades dienen.

Unter Umständen kann das an der oberen Abdeckplatte montierte Zellrad zusammen mit der Abdeckplatte am Gehäuse befestigt werden, oder nach axialem Herausbewegen des Zellrades bzw. dessen Achse aus der oberen Abdeckplatte kann diese horizontal von der Oberseite des Gehäuses abgezogen werden.

Der Antrieb des Zellrades mittels eines radial abragenden Handhebels ergibt eine konstruktiv sehr einfache Lösung, insbesondere wenn die Schwenkachse des Handhebels mit der Achsrichtung des Zellrades übereinstimmt. Durch einen Klinkenmechanismus zwischen schwenkbarem Handhebel und Zellrad ist sichergestellt, dass mittels des hin und her bewegbaren Handhebels das Zellrad nur in eine Richtung, nämlich die Portionierrichtung, weitergedreht werden kann.

Der durch Anschläge begrenzte Bewegungswinkel des Handhebels entspricht dabei dem Teilungswinkel des Zellrades.

Wenn drehfest mit dem Zellrad verbunden und auf dessen Achse angeordnet eine in den Vorratsbehälter hineinragende Rührvorrichtung vorhanden ist, die z.B. quer in das Schüttgut hinein vorstehende Rührarme aufweist, wird durch die Bewegung des Zellrades automatisch das Schüttgut oberhalb des Zellrades durchmischt und vor allem die Brückenbildung zwischen Schüttgut-Partikeln verhindert bzw. aufgebrochen, also ein freies Nachrieseln von Schüttgut in die Zellradschleuse hinein sichergestellt.

Durch ein Getriebe zwischen Zellrad und Rührvorrichtung kann der relativ kleine Drehwinkel beim Weiterdrehen des Zellrades in einen größeren Drehwinkel der Rührvorrichtung umgesetzt werden. Wenn die Rührvorrichtung statt nur radial abstrebender Rührarme Rührblätter aufweist, die insbesondere auch eine axiale Komponente besitzen, wird das Durchmischen des Schüttgutes verbessert und vor allem die Entmischung durch Schwerkrafteinfluss bei unterschiedlich dichten Partikeln im Schüttgut kompensiert.

Wenn zusätzlich zwischen Rührvorrichtung und Zellrad ein Freilauf vorgesehen ist, kann die Rührvorrichtung alleine gedreht werden, beispielsweise vom oberen, freien Ende der Rührvorrichtung her, die bis zum oberen Ende des Vorratsbehälters durchgehen kann, ohne dass dabei das Zellrad mitgedreht wird.

Das obere Einfüllende des Vorratsbehälters ist durch einen Deckel möglichst dicht, vorzugsweise durch dazwischen angeordnete Dichtung, luftdicht und feuchtigkeitsdicht verschlossen, und ebenso die Wände zueinander bzw. gegenüber der Zellradschleuse.

Wenigstens eine der Wände, vorzugsweise die Frontwand zum Benutzer hin, ist dabei aus durchsichtigem Acrylglas gestaltet, um den Inhalt des Vorratsbehälters sehen zu können.

Während das Zellrad selbst aus kostengünstig zu bearbeitendem Material wie Holz oder Kunststoff bestehen kann, wird als oberer Abschluss des Zellrades hierauf eine Zellrad-Oberplatte aus Metall, vorzugsweise aus gehärtetem Stahl, aufgebracht, insbesondere aufgeschraubt mittels vollversenkter Schrauben. Die als Gegenschneide fungierende Oberkante der rückwärtigen Zellwand ist damit die Oberkante dieser Zellrad-Oberplatte, die aufgrund Ihrer Ausbildung aus einem sehr harten Material gegenüber der Schneide eine stärkere Schneidwirkung bewirkt, zumal wenn die Schmalseite dieser Oberplatte schräg stehend geschnitten ist, also die Oberkante dieser rückwärtigen Zellwandfläche der Oberplatte als Schneide ausgebildet ist.

Die spezifische Form der Oberkante, wie vorstehend beschrieben, muss dabei lediglich an der Oberplatte aus Metall realisiert sein, während der darunter liegende Teil des Zellrades aus Holz oder Kunststoff eine einfachere, jedoch nicht in der Aufsicht über die Oberplatte vorstehende, Form besitzen kann, beispielsweise eine einfache nach außen offene V-Form.

Ebenso wie die drehfeste Verbindung zwischen Zellrad und Rührvorrichtung leicht lösbar sein soll, beispielsweise axial gesteckt mit einer Polygonform als Querschnitt oder in Axialrichtung ineinander geschraubt, so sollen auch die Achse des Zellrades zwar drehfest, aber axial leicht lösbar, insbesondere wiederum eingesteckt oder eingeschraubt, mit der Schwenkachse des Handhebels verbunden sein. Der Handhebel ist in der unteren Deckplatte gelagert, die insbesondere als doppelte Deckplatte mit vertikalem Abstand dazwischen gelagert ist.

Das vordere, der Lagerungsachse zugewandte Ende des Handhebels ist gabelförmig ausbildet mit einer oberen und unteren, im Abstand zueinander horizontal liegenden Gehäusehälfte, durch deren fluchtende Bohrungen hindurch sich die Achse des Klinkenritzels erstreckt, deren Zähne von der Sperrklinke, die am Hebel radial weiter außen befestigt ist, in Portionierrichtung vorwärts geschoben wird.

Unterhalb der Zellradschleuse ist der Stellplatz für die Auffanggefäße eine Querplatte horizontal angeordnet, die zur Frontseite, an der der Bediener steht, hin offene Ausnehmungen aufweist, die etwa V-förmig ausgebildet sind und in die hinein die Auffanggefäße, z.B. Teetassen, bis zum Anschlag eingeschoben werden können und sich dann unmittelbar unter der Auslauföffnung der Zellradschleuse befinden. Die Querplatte geht dabei vorzugsweise von der ersten bis zur letzten der Außenwände mehrerer in Reihe miteinander verbundener Vorratsbehälter durch, die über die Zellradschleuse hinweg nach unten verlängert sind.

Zusätzlich kann das Portioniervolumen verstellt werden, indem die Höhe des Zellrades oder die Radzellengröße in der Aufsicht betrachtet veränderbar ist:

Für die Höhenverstellung können die Zellwände des Zellrades axial teleskopierbar sein, beispielsweise in die Maximalposition mittels Federkraft vorgespannt, und auch die untere Deckplatte in Axialrichtung mit dem unteren teleskopierbaren Teil des Zellrades verbunden sein.

Durch einen aus dem Gehäuse nach außen reichenden Einstellhebel, der mit dem unteren, teleskopierbaren Teil des Zellrades verbunden ist, kann die Höhe des Zellrades verstellt werden und damit das Volumen der Radzellen.

Weiterhin kann von außen sichtbar an der Portioniervorrichtung ein Zählwerk vorhanden sein, welches die Anzahl der entnommenen Portionen zählt. Das Zählwerk kann mechanische vom Zählrad aus angetrieben sein, oder elektrisch, mittels Batterie, arbeiten und seine Zählimpulse kontaktlos, insbesondere über elektrische Induktion oder Magnetismus z.B. von den vorbeiwandernden radial äußeren Enden der Zellwände und damit insbesondere der metallenen Zellrad-Oberplatte oder speziell angeordneten Magneten erhalten.

Mit dieser Vorrichtung ist somit eine Vorgehensweise beim Portionieren möglich, bei der die in die Radzelle des Zellrades sich hineinbewegenden Schüttgut-Partikel zwischen der Schneide der oberen Abdeckplatte und der durch die Oberseite des Zellrades gebildeten Gegenschneide abgeschert werden können, so dass große Partikel nicht zwangsweise ganz oder überhaupt nicht in die Radzelle und damit das Portioniervolumen gelangen müssen. Auf diese Art und Weise wird ein sehr konstanter Füllungsgrad des Messvolumens sichergestellt und damit eine sehr genaue und gleichmäßige Portionierung.

Durch das radial fortlaufende Abscheren und nicht schlagartige Aufeinandertreffen von Schneide und Gegenschneide über die gesamte radiale Erstreckung ist der Kraftaufwand für dieses Abscheren relativ gering, so dass ein Verklemmen verhindert wird, und auch die die Handkraft des Benutzers umsetzende Mechanik muss nur mäßig stabil ausgebildet sein, was die Herstellungskosten der Vorrichtung sowie deren Lebensdauer verbessert.

Durch das automatische Durchmischen des Schüttgutes ausgelöst durch die Bewegung des Zellrades, wird bei einem inhomogenen Schüttgut dessen Durchmischung aufrechterhalten und dessen Entmischung verhindert bzw. aufgehoben.

Durch die Verstellung des Portioniervolumens kann die Portioniervorrichtung für unterschiedliche Portionieraufgaben leicht umgestellt werden.

### c) Ausführungsbeispiele

Eine Ausführungsform gemäß der Erfindung ist anhand der folgenden Figuren beispielhaft näher beschrieben. Es zeigen:
- Fig. 1:: Einen Portionierer mit mehreren Portioniervorrichtungen nebeneinander in perspektivischer Ansicht sowie Stirnansicht,
- Fig. 2:: die vertikalen Zellradschleusen im ganz und nur teilweise zusammengebauten Zustand in mehreren Ansichten,
- Fig. 3:: die bewegliche Funktionseinheit ohne umgebendes Gehäuse,
- Fig. 4:: eine andere Bauform einer vertikalen Zellradschleuse,
- Fig. 5:: eine Lösung mit horizontal liegender Zellradschleuse, und
- Fig. 6:: eine Portioniervorrichtung mit einer Schublade.

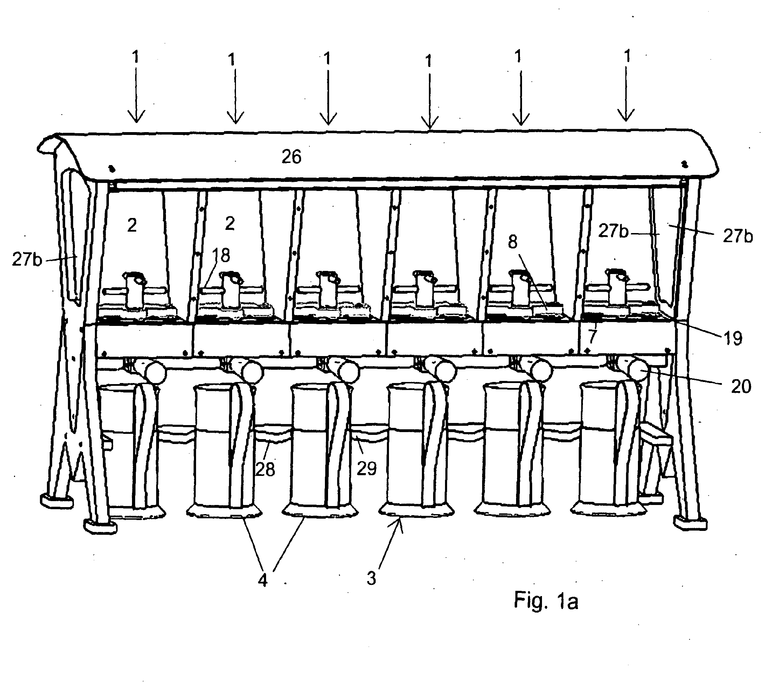

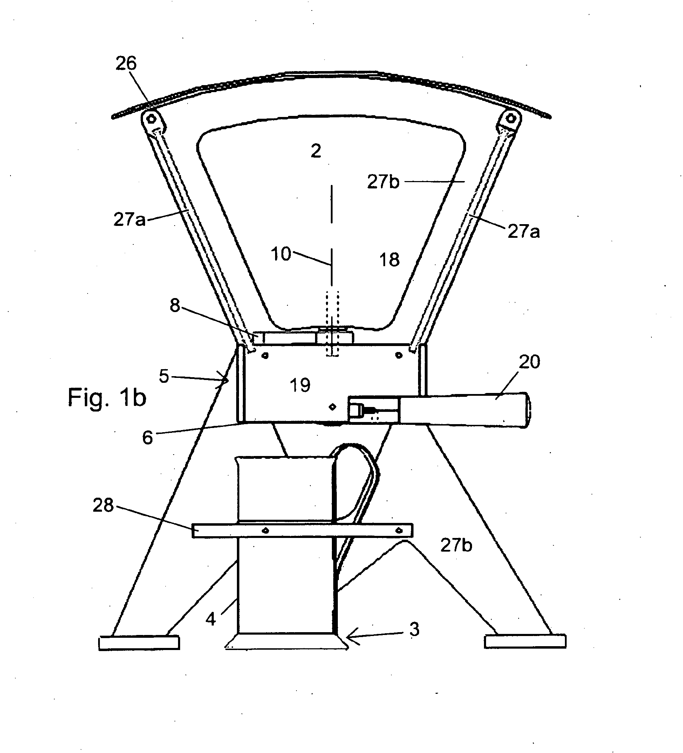

Es wird darauf hingewiesen, dass die Portioniervorrichtungen der Figuren 1 - 4 nicht gemäss der Erfindung nach Anspruch 1 sind.

Als die Portionierung bewirkender, beweglicher und entleerbarer Portionierbehälter 40 zwischen dem Vorratsbehälter 2 und dem darunter gestellten Auffanggefäß 4 können unterschiedliche Konstruktionen dienen.

Die Fig. 1 bis 3 zeigen einen Portionierbehälter 40 mit einer vertikal stehenden Zellradschleuse 5:

Der grundsätzliche Aufbau einer solchen Portioniervorrichtung 1 ist am besten in der Stirnansicht der Figur 1b zu erläutern, in der nur die erste Portioniervorrichtung 1 der in Reihe hintereinander zusammengefügten Portioniervorrichtungen 1 der Figur 1 a zu erkennen ist:

In der Mitte des Höhenbereiches befindet sich der Handhebel 20, mit dessen Hilfe die Zellradschleuse 5 betätigt wird, von der in Figur 1b lediglich das Zellradgehäuse 19 sowie die darüber angeordnete obere Deckplatte 8 zu erkennen ist.

Darüber hinaus steht in Axialrichtung 10 nach oben die Rührvorrichtung 18 vor, von deren axialem Bolzen in Querrichtung zwei oder mehr Rührarme 24 abstehen, insbesondere auf verschiedenen Höhen.

Diese befinden sich somit im Inneren des Vorratsbehälters 2 für das zu portionierende Schüttgut - welches nicht dargestellt ist - der sich oberhalb der Zellradschleuse 5 befindet und begrenzt wird durch die beiden nach unten sich konisch gegeneinander annähernden Wände 27a, deren unterer Abstand etwa dem Durchmesser der Zellradschleuse 5 entspricht.

Die quer zur Blickrichtung der Figur 1b liegende Rückwand 27b des Vorratsbehälters 2 ist auf der Oberseite bogenförmig gekrümmt, so dass der Vorratsbehälter 2 durch einen analog gekrümmten oberen Deckel 26 verschlossen werden kann, der im Gegensatz zu der Prinzipdarstellung der Figur 1b mittels einer Dichtung gegenüber den Wänden des Vorratsbehälters 2 abgedichtet ist, was ebenso für die Verbindung zwischen Zellradschleuse 5 und den unteren Rändern der Wände 27a, b gilt.

Die von oben nach unten zur Zellradschleuse 5 hin sich konisch aneinander annähernden Außenkanten der Wände 27b sind bei den äußersten Portioniervorrichtungen einer Reihe über die Zellradschleuse 5 hin nach unten verlängert und entfernen sich in diesem Bereich wieder konisch voneinander, so dass eine X-förmige Außenkontur dieser Wände entsteht.

Dadurch wird der Vorratsbehälter 2 und Zellradschleuse 5 zusammen auf einer solchen Höhe gehalten, dass unter die Auslauföffnung der Zellradschleuse 5 der gewünschte Auffangbehälter 4, in diesem Fall eine Teetasse, gestellt werden kann, in die der portionierte Tee hineinfällt.

Damit sich das Auffanggefäß 4 genau unter der Auslauföffnung 6 befindet, ist unter der Zellradschleuse 5 etwa auf der Hälfte der verbleibenden Höhe eine Querplatte 28 zwischen je zwei benachbarten Wänden 27b angeordnet, die in der Aufsicht betrachtet an jeder Position 3 eine Ausnehmung 29 besitzt, wie besser in Figur 1a zu erkennen, in die hinein die Auffanggefäße 4 soweit geschoben werden können, dass sie beim Anliegen in der V-förmigen Ausnehmung 29 genau unter der Auslauföffnung 6 liegen.

Figur 1 a zeigt den gesamten Portionierer mit in diesem Fall sechs Portioniervorrichtungen 1 nebeneinander, die zwischen sich jeweils eine gemeinsame Wand 27b aufweisen, von denen nur die erste und letzte bis unter die Zellradschleuse 5 hinabreichen zum Aufständern der gesamten Vorrichtung auf der benötigten, zuvor erwähnte Höhe für das darunter stehende Auffanggefäß 4. Der Deckel 26 sowie die V-förmigen Wände 27a gehen dagegen über die gesamte Reihe der Portioniervorrichtungen 1 durch.

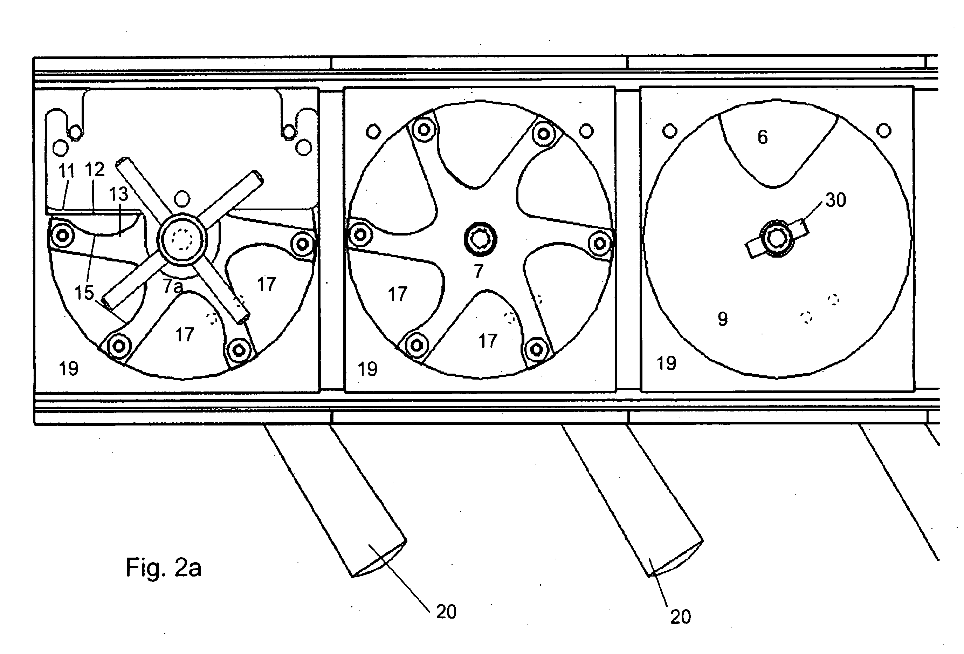

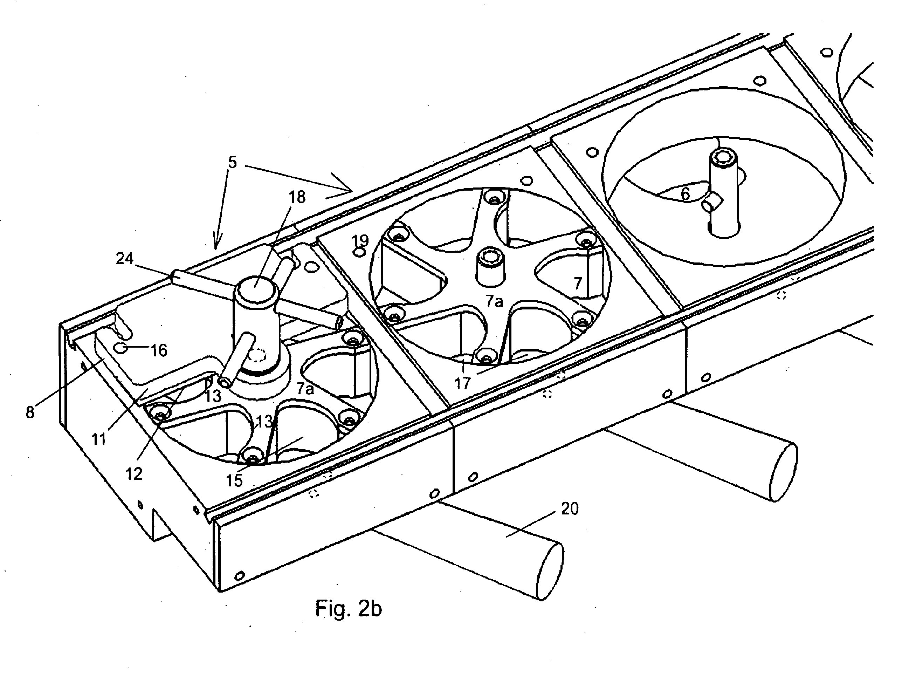

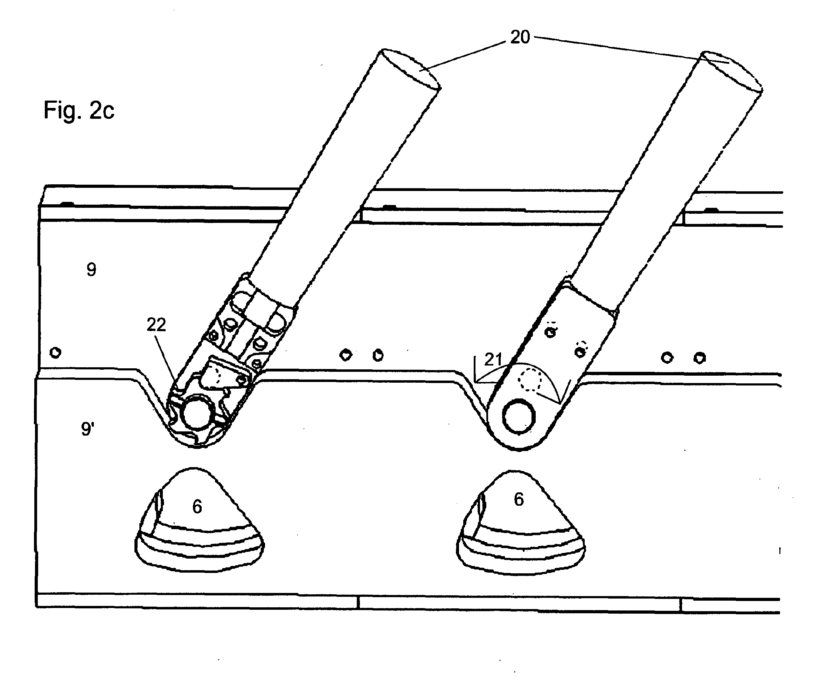

Kernstück der Portioniervorrichtung 1 sind die Zellradschleusen 5, die anhand der Figuren 2 näher erläutert werden:

Dabei zeigt Figur 2a in der Aufsicht von oben die ersten drei nebeneinander angeordnete Zellradschleusen 5 des Portionierers gemäß Figur 1 a bei abgenommenen Vorratsbehältern und in unterschiedlichem Montagezustand der einzelnen Zellradschleusen 5:

Vollständig montiert ist die ganz linke Zellradschleuse 5. Von links nach rechts gesehen fehlt bei der zweiten Zellradschleuse der Figur 2a die obere Deckplatte 8 und die Rührvorrichtung 18, bei der dritten zusätzlich das gesamte Zellrad 7, so dass dort nur die untere Deckplatte 9 mit der Auslauföffnung 6 zu erkennen ist. Vorhanden ist allerdings die Achse für das Zellrad 7.

Der Aufbau einer Zellradschleuse 5 wird anhand der Darstellung der Figur 2b erläutert: Wie dort am besten anhand der von links nach rechts zweiten Zellradschleuse 5 erkennbar, dreht sich in einer horizontal liegenden Platte als Zellradgehäuse 19 ein Zellrad 7 um seine vertikale Achse, welches zusammen mit seiner Zellrad-Oberplatte 7a die gleiche Höhe wie das Zellradgehäuse 19 besitzt in einer von oben nach unten durchgehenden zylindrischen Durchgangsöffnung des Zellradgehäuses 19.

Das Zellrad 7 besitzt vom Außenumfang her offene Radzellen 17, die das zu portionierende Volumen darstellen, welches auf der Ober- und Unterseite begrenzt wird durch eine feststehende obere Deckplatte 8 und eine untere Deckplatte 9, die unmittelbar auf dem Zellradgehäuse 19 aufliegen und in enger Anlage an der Oberseite bzw. Unterseite des Zellrades 7 anliegen.

Wie die erste Zellradschleuse 5 der Figur 2b zeigt, deckt die obere Deckplatte 8 etwa die Hälfte der Grundfläche des Zellrades 7 ab und kann mittels Passstiften 16 passgenau gegenüber dem Zellradgehäuse 19 positioniert und auch befestigt werden.

Dies ist wichtig, da sich die obere Deckplatte 8 auch über die Rotationsachse des Zellrades 7 hinweg erstreckt und das Zellrad 7 mit einer Radachse in der oberen Deckplatte 8 gelagert ist, und sich auch über diese hinweg nach oben erstreckt als in den Vorratsbehälter 2 hineinerstreckende Rührvorrichtung 18 mit quer von dem zentralen Bolzen nach außen abragenden Rührarmen 24.

Durch Abnehmen bzw. Aufstecken oder horizontales Aufschieben der oberen Deckplatte 8 z.B. einschließlich darin gelagertem Zellrad 7 und Rührvorrichtung 18, kann annähernd der gesamte bewegliche Teil der Zellradschleuse 5 schnell und einfach montiert bzw. gewechselt werden.

Um Tee-Partikel beim Füllen der Radzelle 17 entsprechend der gewünschten normalen Verdichtung beim vollständigen Befüllen ggf. nur teilweise in das Portioniervolumen, also die Radzelle 17, hineingeraten zu lassen, werden diese Partikel, die in den Figuren nicht dargestellt sind, unter Umständen auch zertrennt. Zu diesem Zweck ist die vordere Funktionskante 11 der oberen Deckplatte 8 als Schneide 12 ausgebildet, z.B. als auswechselbare Stahlklinge in einer Aussparung der Deckplatte 8, die aus Holz oder Kunststoff besteht. Die vordere Funktionskante 11 ist diejenige etwa radial verlaufende Kante der Unterseite der oberen Deckplatte 8, gegen die das beim Portionieren vorwärts drehende Zellrad 7 sich annähert.

Im Fall der Figur 2b verläuft diese Kante und damit auch die Schneide 12 nicht genau in Radialrichtung zur Axialrichtung 10, der Rotationsachse des Zellrades 7, sondern parallel dazu versetzt in Bewegungsrichtung des Zellrades, was jedoch nicht zwingend notwendig ist.

Wichtig ist dagegen, dass die in Betätigungsrichtung des Zellrades 7 hinten liegende, rückwärtige Zellwand 13 jeder Radzelle 17 eine solche Form besitzt, dass sie nicht parallel zur vorderen Funktionskante und damit der Schneide 12 liegt, sondern schräg zu dieser verläuft, damit beim Vorwärtsdrehen beide Kanten nicht über ihre gesamte axiale Erstreckung gleichzeitig aufeinander treffen und damit hohe Scherkräfte bewirken, sondern der Abscherpunkt während des Weiterdrehens des Zellrades 7 sich radial bzw. entlang der Schneidekante 12 verlagert.

Vorzugsweise hat die rückwärtige Zellwand 13 dabei eine konkav in die rückwärtige Zellwand hinein ausgebildete Ausbuchtung 15, so dass beim Annähern der rückwärtigen Zellwand 13 an die Schneide 12 diese Schneide 12 zunächst von dem radial äußersten Punkt der Zellwand 13 und natürlich auch einem der radial weit innenliegenden Punkte der Radzelle 17 erreicht wird, und beim Weiterdrehen diese beiden Abscherpunkte sich in Richtung des tiefsten Punktes der Ausbuchtung 15 bewegen.

Durch diese Form wird auch vermieden, dass ein eventuell zu zerschneidender Partikel beim Weiterdrehen immer mehr radial nach außen verlagert und damit unter Umständen zum Schluss zwischen Außenumfang des Zellrades 7 und dem Innenumfang des Zellradgehäuses 19 eingeklemmt wird.

Um ein sauberes Abscheren gegenüber der harten, metallenen Schneide 12, die gegenüber der Deckplatte 8 in der Regel auswechselbar gestaltet ist, zu ermöglichen, ist zwar das Zellrad 7 aus einem wenig harten Material wie etwa Kunststoff oder Holz geformt, auf der Oberseite des Zellrades 7 ist dagegen eine aus Metall, insbesondere gehärtetem Metall, hergestellte Zellrad-Oberplatte 7a aufgeschraubt durch vollständig versenkte Schrauben, vorzugsweise eingeschraubt in den radial äußeren Enden der einzelnen Zellwände.

Die vorbeschriebene Form der rückwärtigen Zellwand 13 muss dabei wenigstens die Oberplatte 7a jeweils aufweisen, und zwar vorzugsweise entlang deren Oberfläche, wobei die Schnittfläche zwischen Oberseite und Unterseite der Oberplatte schräg gestellt sein kann, so dass die Oberkante wiederum als scharfe Schneide ausgebildet ist.

Bei dem darunter liegenden Zellrad 7 aus Kunststoff kann es sich dagegen um eine einfacher geformte rückwärtige Zellwand 13, beispielsweise eine gerade Wand, handeln, die in der Aufsicht betrachtet vorzugsweise jedoch nicht über die Kontur der Zellrad-Oberplatte 7a vorstehen sollte.

Das Zellrad 7 kann lediglich in Vorwärtsrichtung, also der Portionierrichtung, um einen Betätigungswinkel 21 hin- und herbewegt werden, der durch Anschläge in Figur 2c erkennbar ist und in der Regel dem Teilungswinkel einer Radezelle 17 entspricht, also 360° geteilt durch die Anzahl der gleichmäßig verteilten Radzellen 17.

Zu diesem Zweck ist der Handhebel 20, wie die von schräg unten gezeichnete Darstellung der Figur 2c zeigt, auf der Achse des Zellrades 7 schwenkbar gelagert, und zwar mit seiner Oberseite in der unteren Deckplatte 9 und mit seiner Unterseite in einer im Abstand darunter befindlichen, weiteren, unteren Deckplatte 9'.

Die obere Deckplatte 8 sowie die unteren Deckplatten 9 können auch zusammen mit ihren Abstandselementen als ganzer Block ausgebildet sein.

Der Handgriff 20 weist eine schwenkbare Klinke auf, die ein Klinkenritzel 22, welches in beide Richtungen drehbar ist und drehfest verbunden ist mit der Achse des Zellrades 7, in Portionierrichtung weiter schiebt, in Gegenrichtung jedoch über die Zähne dieses Klinkenritzels 22 rutscht, ohne dieses zu drehen.

Zu diesem Zweck ist die Klinke schwenkbar um eine Achse parallel zur Schwenkachse des Hebels in diesem Handhebel 20 gelagert und die Zähne des Ritzels 22 sind in Rückwärtsrichtung nur flach ansteigend ausgebildet.

Die drehfeste Verbindung zwischen dem Klinkenritzel 22 und der übrigen Zellradschleuse 5 erfolgt vorzugsweise durch einen Querbolzen, mittels welchem das untere Ende der Zellradachse in das obere Ende des Klinkenritzels 22 drehfest eingesteckt werden kann, was durch einfaches Aufsetzen und Fixieren der Oberplatte 8 zusammen mit dem Zellrad in das Zellradgehäuse 19 geschieht, wenn das Klinkenritzel 22 bereits im Gehäuse gelagert ist.

Die Bewegungsmöglichkeit und damit der Betätigungswinkel 21 des Handhebels 20 wird durch entsprechende Ausbuchtungen im Höhenbereich zwischen den beiden unteren Deckplatten 9 und 9' vorgegeben, in dem der Hebel 20 gelagert ist.

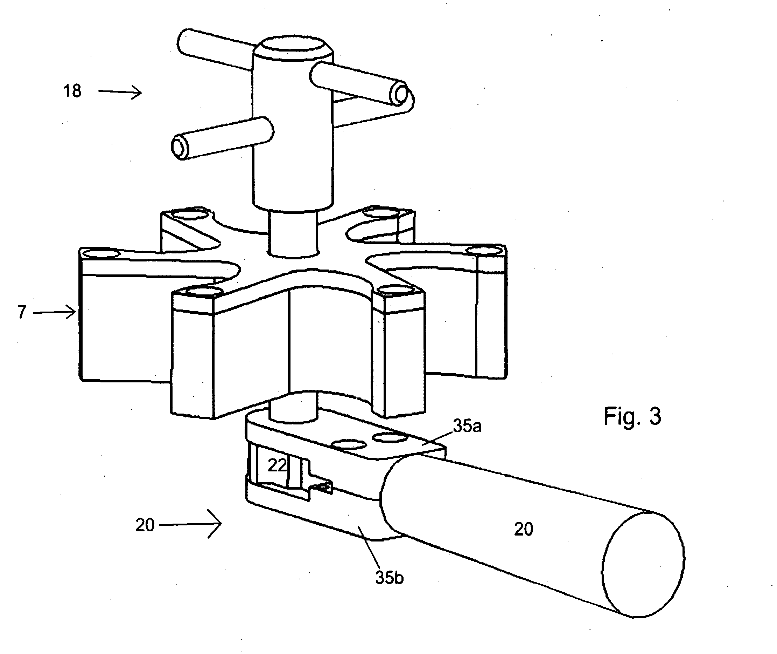

Figur 3 zeigt die drehbaren bzw. schwenkbaren Teile der Portioniervorrichtung als Funktionseinheit ohne das umgebende Gehäuse:

Dabei ist gut erkennbar, dass die Schwenkachse des Handgriffes 20, die Rotationsachse des Zellrades 7 und die Rotationsachse der Rührvorrichtung 18 übereinstimmen und körperlich durch einen in axialer Richtung vorzugsweise mehrteiligen Bolzen gebildet werden. So kann - was in Figur 3 nicht zu erkennen ist - beispielsweise das Rührwerk 18 vom Zellrad 7 getrennt werden und/oder ebenso der Achsbolzen, der aus dem Handgriff axial hervorsteht und drehfest mit dem Klinkenritzel 22 verbunden ist, vom Zellrad 7 getrennt werden.

Dabei ist auch zu erkennen, dass das schwenkachsenseitige vordere Ende des Handgriffes 20 gabelförmig ausgebildet ist mit horizontaler Teilung und oberer und unterer Gehäusehälfte 35a, b.

Die Gabel ist zum freien Ende hin offen und im Abstand dazwischen ist das Klinkenritzel 22 gelagert, dessen Achszapfen sich durch die obere Gehäusehälfte hindurch erstreckt und das Zellrad 7 bzw. deren Achszapfen erreicht und mit diesem drehfest verbunden oder gar einstückig ausgebildet ist.

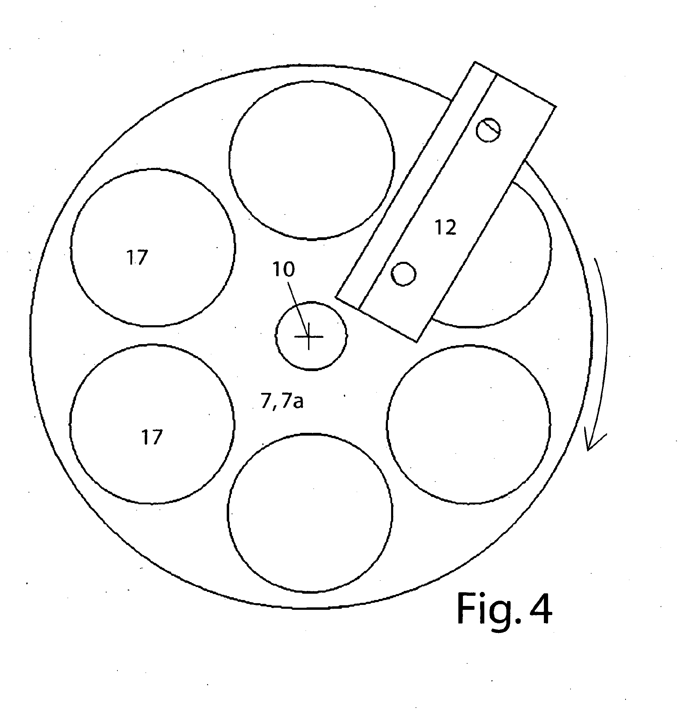

Die Aufsicht auf den Griff gemäß Figur 4 bei abgenommener obere Gehäusehälfte 35a zeigt, dass in dem Freiraum zwischen den Gehäusehälften 35a, b außer dem Klinkenritzel 22 in Richtung zum Handgriff 20 hin auch noch die Sperrklinke schwenkbar gelagert ist, die von ihrer Rückseite, also der vom Klinkenritzel 22 abgewandten, Seite her mittels einer - in Figur 4 nicht eingezeichneten - Feder gegen das Klinkenritzel 22 hin beaufschlagt ist.

Figur 4 zeigt dagegen eine Aufsicht von oben auf ein ebenfalls vertikal gelagertes, aber anders gestaltetes Zellrad 7, bei dem im Gegensatz zu demjenigen der Fig. 1 bis 3, insbesondere der Fig. 2, die einzelnen Radzellen 17 radial nach außen nicht offen, sondern geschlossen sind, also parallel zur Axialrichtung 10 der Zellrades 7 verlaufende Durchgangsbohrungen im Zellrad darstellen.

Der Vorteil dieser Lösung besteht darin, dass ein solches Zellrad 7 nicht über den gesamten Umfang dicht in einem Zellradgehäuse 19 aufgenommen sein muss, sondern lediglich an der Ober- und Unterseite zwischen einer oberen und unteren Deckplatte 8, 9 aufgenommen sein muss, was den Herstellungsaufwand deutlich reduziert.

Auch hier ist eine Schneide 12 radial verlaufend etwa an der oberen Deckplatte 8 befestigt, und schert beim Drehen des Zellrades 7 ggf. Partikel ab gegenüber der Oberkante des Zellrades 7 oder einer auf dessen Oberseite angeordneten Zellrad-Oberplatte 7a, die wie erläutert aus härterem Material als das Zellrad 7 selbst besteht.

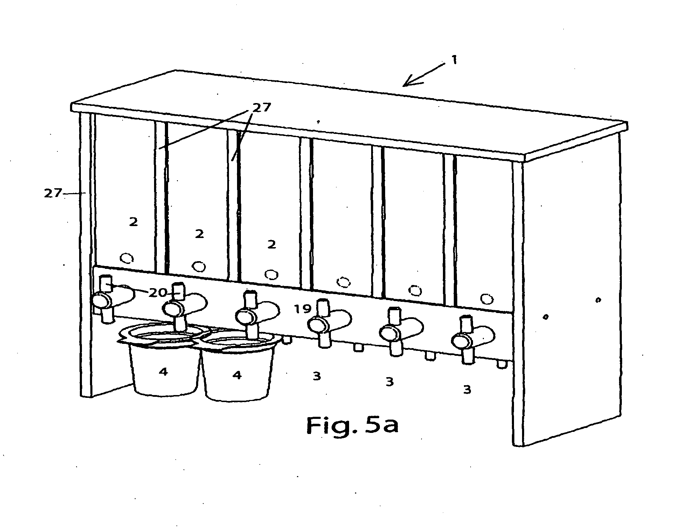

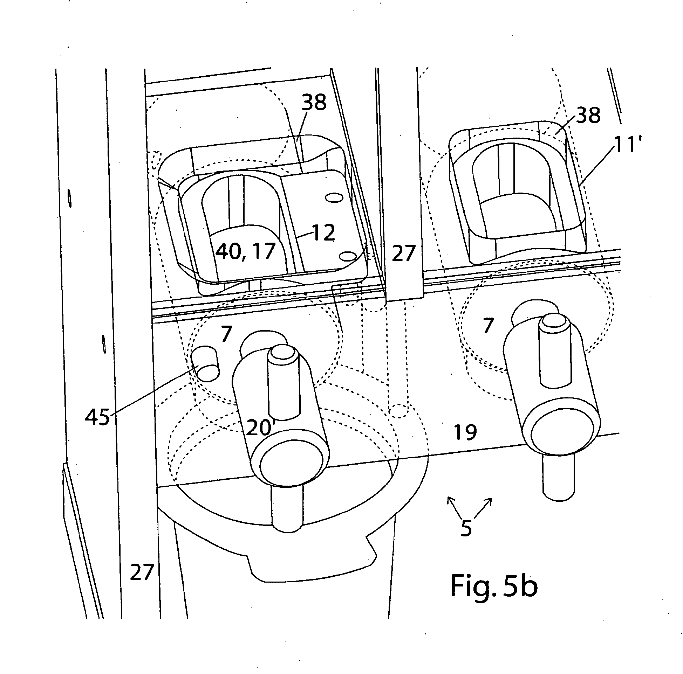

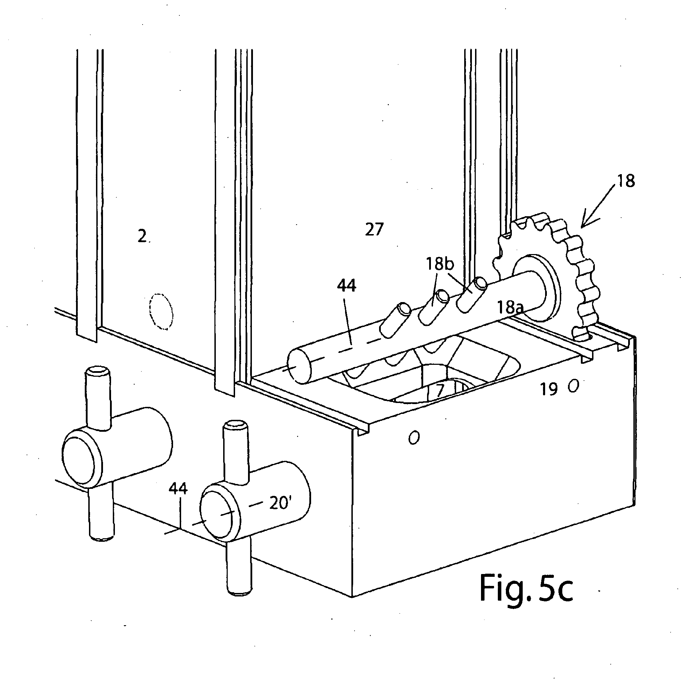

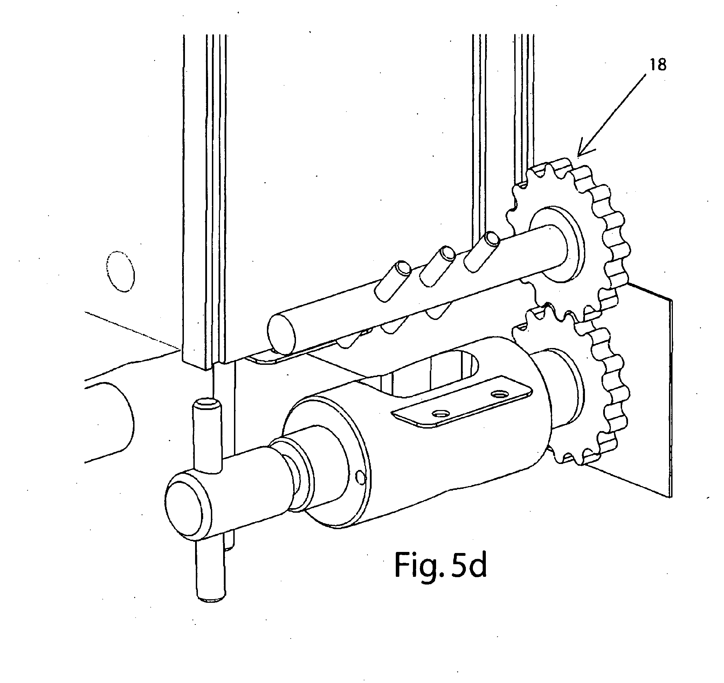

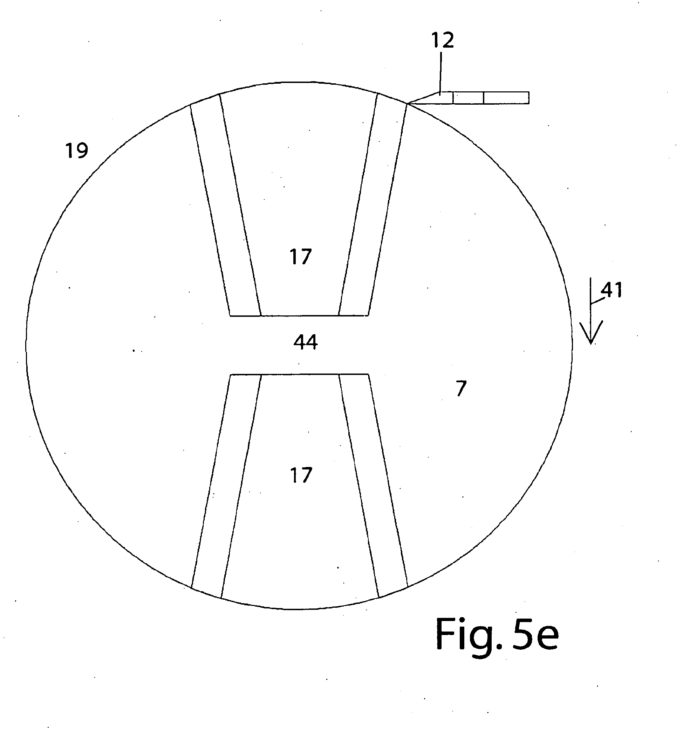

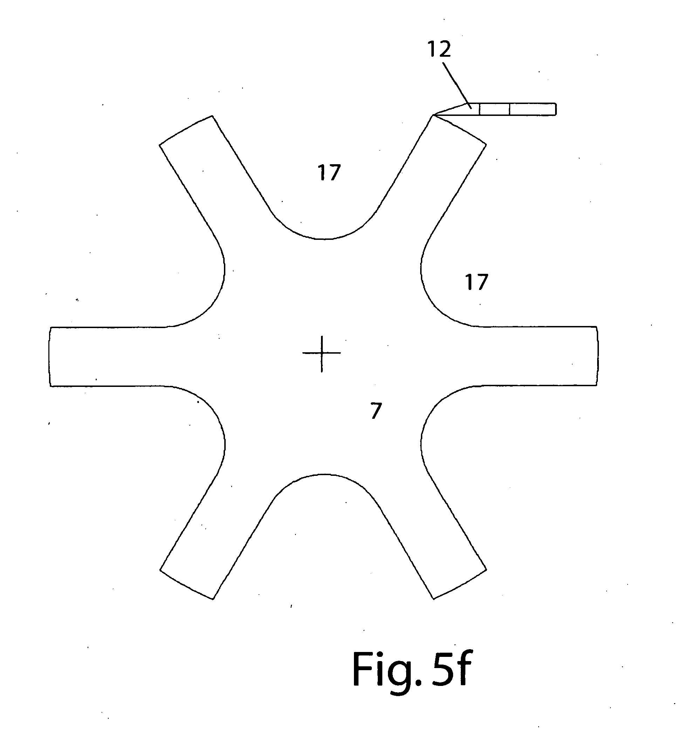

Die Fig. 5 zeigen eine Portioniervorrichtung 1, bei der zum einen die Seitenwände 27 anders, also über ihre Höhe gleich breit bleibend, ausgebildet sind und dementsprechend auch die dazwischen ausgebildeten Vorratsbehälter 2 über den größten Teil ihrer Höhe einen gleich bleibenden Querschnitt aufweisen und sich nur zur unteren Auslauföffnung hin ggf. konisch verjüngen.

Der wichtigere Unterschied gegenüber der Lösung der Fig. 1 bis 3 besteht jedoch darin, dass hier die Zellradschleusen 5 horizontal liegen, also um eine horizontal liegende Rotationsachse 44 drehbar sind, wie am besten in den Fig. 5b und c zu erkennen.

Auch hier sind die horizontal liegenden Zellräder 7 in einer - nunmehr horizontal liegenden - Horizontalbohrung in einem Zellrad-Gehäuse 19 drehbar gelagert, welches als quer verlaufende Platte oberhalb der Stellplätze 3 für die Auffanggefäße zwischen den äußersten Seitenwänden angeordnet ist, und in der die Zellräder 7 aller Zellradschleusen 5 gelagert sind. Der Drehantrieb der Zellräder 7 erfolgt über ein koaxial von deren vorderer Stirnfläche nach vorn abstehendes Handrad 20', welches drehfest mit dem Zellrad 7 verbunden ist.

Fig. 5b zeigt den komplett montierten Endzustand zweier nebeneinander liegender Zellradschleusen 5, während in den Darstellungen der Fig. 5c und d zur besseren Übersichtlichkeit einzelne Teile entfernt sind.

Fig. 5b zeigt - beispielhaft für die Gestaltung eines Zellrades 7 mit nur zwei radial einander gegenüberliegenden Radzellen 17, wie Fig. 5e in axialer Ansicht zeigt - wie die an der Oberseite des Zellrades 7 positionierte Radzelle 17 mit der darüber befindlichen Einlauföffnung 38 in dem Zellradgehäuse 19 fluchtet und die Teepartikel deshalb von dem darüber liegenden Vorratsbehälter 2 aus in die Radzelle 17 fallen und diese füllen.

Wenn sich dabei Partikel über den Außenumfang des Zellrades 7 hinwegerstrecken, also teilweise innerhalb der Radzelle 17 und teilweise in der darüber liegenden Einlauföffnung des Zellradgehäuses 19, liegen, müssen diese abgeschert werden, um das Zellrad 7 weiterdrehen zu können und den Inhalt der Radzelle 17, der dann ein definiertes Volumen besitzt, durch Weiterdrehen nach unten in den Auffangbehälter entleeren zu können.

Zu diesem Zweck ist an der in Drehrichtung des Zellrades 7 entgegenstehenden hinteren Funktionskante 11' der Einlauföffnung 38 eine Schneide 12, vorzugsweise in Form eines separaten Messers, parallel zu einer Mantellinie der Radzelle und eng an deren Außenumfang entlang gleitend angeordnet, die dieses Abscheren übernimmt.

Vorzugsweise ist die Hinterkante der Radzelle 17, gegenüber der diese Schneide 12 abschert, nicht parallel zu einer Mantellinie der Radzelle 17 verlaufend ausgebildet, sondern gewölbt oder schräg hierzu verlaufend, um einen ziehenden Schnitt gegenüber der achsparallel liegenden Schneide 12 zu bewirken.

Auch über den übrigen Umfang der Radzelle 17 liegt diese eng in einer entsprechenden Innenbohrung des Zellradgehäuses 19 an, um ein Herausfallen der Tee-partikel aus der gefüllten Radzelle 17 zu verhindern, bis diese ihre nach unten gerichtete und mit der dortigen, unterhalb des Zellrades 7 im Zellradgehäuse 19 vorhandenen Auslauföffnung fluchtet.

Fig. 5b zeigt ferner an der vorderen, zugänglichen Stirnseite des Zellrades 7 versetzt gegenüber dem mittigen Handrad 20' einen Einsteller 45 in Form eines kleinen Drehgriffes, der stufenlos oder auch rastbar in Stufen ausgeführt sein kann, und dessen Funktion die Verstellung des Volumens der Radzellen 17 ist, beispielsweise indem deren Boden radial mittels des Einstellers 45 bewegt wird.

Fig. 5f zeigt ebenfalls in axialer Blickrichtung eine Bauform einer Radzelle 17 mit mehr als zwei, in diesem Fall sechs, Radzellen 17, und damit Portionierbehältern 40 sowie die mit dieser Radzelle 17 zusammenwirkende Schneide 12, jedoch ohne das umgebende Zellradgehäuse 19.

Die Fig. 5c und 5d zeigen - in ersterem Fall mit entfernter Seitenwand 27, im letzteren Fall mit zusätzlich entferntem Zellradgehäuse 19 - die mit dem Zellrad 7 optional vorhandene zusätzliche Rührvorrichtung 18:

Diese umfasst eine parallel zur Rotationsachse 44 des Zellrades 7 gelagerte, allerdings im Vorratsbehälter 2 über der Einlauföffnung 38 des Zellradgehäuses 19 positionierte Rührachse 18a, von der aus seitlich abstrebende Rührarme 18b abstehen. Über auf der Rotationsachse 44 des Zellrades 7 einerseits und auf der Rührachse 18a andererseits drehfest angeordnete und miteinander kämmende Zahnräder können diese drehfest miteinander gekoppelt werden.

Dadurch wird die Brückenbildung zwischen den Teepartikeln vermieden und damit das vollständige Füllen der Radzellen 17 gefördert.

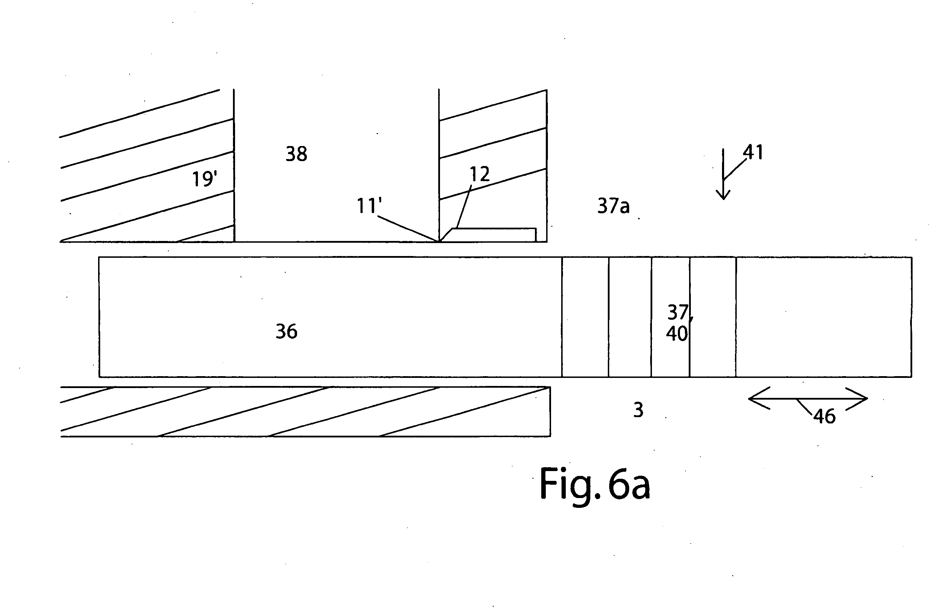

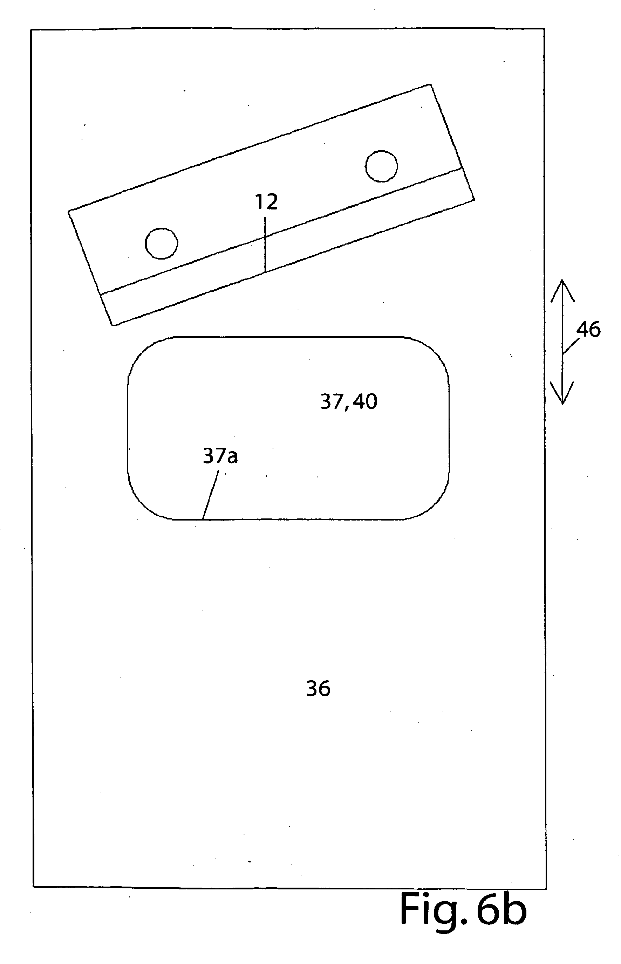

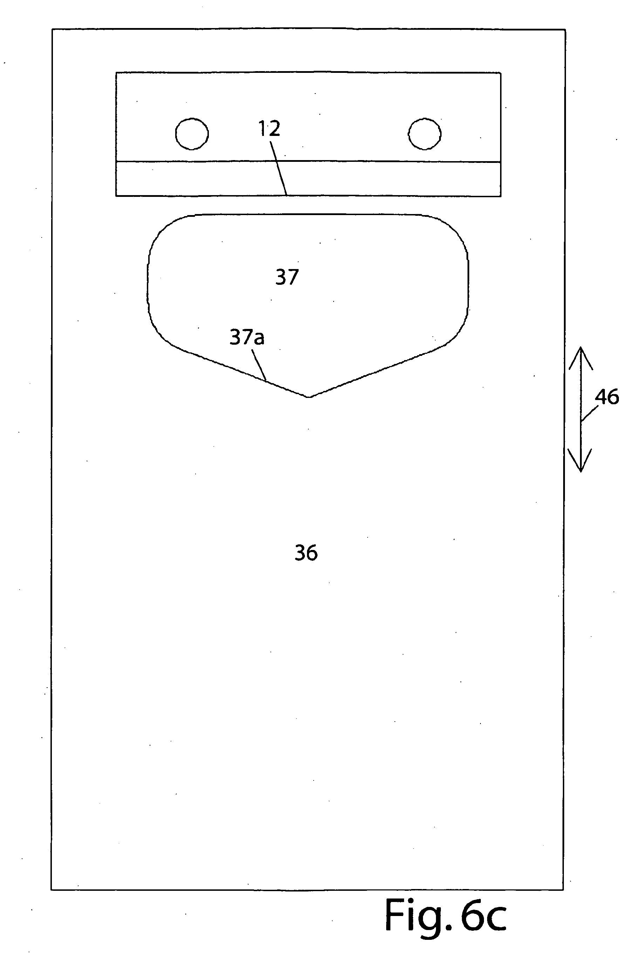

Die Fig. 6 zeigen als Portionierbehälter 40 eine vertikale Durchgangsöffnung 37 in einer Schublade 36.

Die Schublade 36 ist in einem Schubladengehäuse 19' horizontal verschiebbar gelagert. In der eingeschobenen Füllstellung fluchtet die Oberseite der Durchgangsöffnung 37 mit der darüber liegenden Einfüllöffnung 38, die im oberen Teil des Schubladengehäuses 19' ausgebildet ist, während die untere Seite der Durchgangsöffnung 37, die den Portionierbehälter 40 bildet, von einem darunter befindlichen Teil des Gehäuses 19' verschlossen ist.

Wird die auf diese Art und Weise gefüllte Durchgangsöffnung 37 nach unten geöffnet, indem die Schublade 36, z.B. mittels eines nicht dargestellten Handgriffes an dessen vorderer, zugänglicher Stirnseite, nach vorne aus dem Gehäuse 19' herausgezogen wird, so gibt die Vorderkante des unteren Teils des Gehäuses 19' die Durchgangsöffnung 37 zunehmend nach unten frei, so dass das in dieser Durchgangsöffnung 37 befindliche Teegranulat nach unten auf den Stellplatz 3 und ein dort aufgestelltes Auffanggefäß 4 herabfällt.

Auch dabei müssen Partikel abgeschert werden, die sich beim Füllen teilweise in die Durchgangsöffnung 37 und teilweise in die Einlauföffnung 38 hinein erstrecken. Dazu ist wiederum an der der hinteren Kante 37a der Durchgangsöffnung 37 entgegenstehenden Hintere Funktionskante 11' der Einlauföffnung 38 eine Schneide 12 angeordnet.

Auch hier ist zwischen den beiden zusammenwirkenden Schneiden bzw. Scherkanten ein ziehender Schnitt quer zur Auszugsrichtung 46 der Schublade beabsichtigt. Wenn die Hinterkante 37a der Durchgangsöffnung 37 -- wie in Fig. 6b dargestellt - dabei genau lotrecht zur Auszugsrichtung 46 liegt, so wird aus diesem Grund die Schneide 12 hierzu schräg angeordnet sein.

Eine andere Lösung besteht darin, die Schneide 12 - wie in Fig. 6a dargestellt - genau im rechten Winkel zur Auszugsrichtung 46 zu stellen, die Hinterkante 37a jedoch schräg hierzu, beispielsweise als gepfeilt zur Auszugsrichtung 46 liegende, geknickte Kante.

Selbstverständlich ist es bei allen Lösungen möglich, die Schneide 12 statt am umgebenden Gehäuse auch an der Hinterkante 37a der Schublade auszubilden, die im übrigen vorzugsweise ohnehin mit einer Oberplatte 7a aus hartem Material ausgestattet ist, die mit dem Rest der Schublade 36, welches dann aus weicherem Material wie Holz oder Kunststoff bestehen kann, fest verbunden ist.

### BEZUGSZEICHENLISTE

- 1: Portioniervorrichtung
- 2: Vorratsbehälter
- 3: Stellplatz
- 4: Auffanggefäß
- 5: Zellradschleuse
- 6: Auslauf-Öffnung
- 7: Zellrad
- 7a: Zellrad-Oberplatte
- 8: obere Deckplatte
- 9: untere Deckplatte
- 10: Axialrichtung
- 11: vordere Funktionskante
- 11': hintere Funktionskante
- 12: Schneide
- 12': Gegenschneide
- 13: rückwärtige Zellwand
- 14': Längskante
- 15: Ausbuchtung
- 16: Passstifte
- 17: Radzelle
- 18: Rührvorrichtung
- 19: Zellrad-Gehäuse
- 19': Schubladengehäuse
- 20: Handhebel
- 20': Handrad
- 21: Betätigungswinkel
- 22: Klinkenritzel
- 24: Rührarm
- 25: Getriebe
- 26: Deckel
- 27: Wände
- 27a: konische Wand
- 27b: parallele Wand
- 28: Querplatte
- 29: Ausnehmung
- 30: Radialrichtung
- 35a, b: Gehäusehälften
- 36: Schublade
- 37: Durchgangsöffnung
- 38: Einlauföffnung
- 40: Portionier-Behälter
- 41: Schwerkraftrichtung
- 44: Rotationsachse
- 45: Einsteller
- 46: Zugrichtung

## Patentansprüche

1. Portioniervorrichtung (1) für ein Schüttgut mit ungleichmäßiger Partikelgröße, -form und -gewicht, mit
- einem Vorratsbehälter (2) mit einer Auslauf-Öffnung am unteren Ende,
- einem darunter angeordneten Stellplatz (3) für ein Auffanggefäß (4),
- einem Portionier-Behälter (40) zwischen der Auslauföffnung des Vorratsbehälters (2) und dem Stellplatz in Form einer Zellradschleuse (5) der insbesondere bewegbar und entleerbar ist,
- wobei die Rotationsachse (44) der Zellradschleuse (5) horizontal angeordnet ist, und
- wobei die der Drehrichtung des Zellrades (7) entgegenstehende hintere Funktionskante (11') der Einlauföffnung (38) im Zellradgehäuse (19) als Schneide (12) ausgebildet ist und möglichst spielfrei unmittelbar auf der radialen Außenseite des Zellrades (7) läuft,
**dadurch gekennzeichnet, dass**
- die Schneide (12) als ein separat befestigtes Messer ausgebildet ist.

2. Portioniervorrichtung nach Anspruch 1, wobei
- eine Rührvorrichtung (18) im Vorratsbehälter (2) vorhanden ist und
**dadurch gekennzeichnet, dass**
die Rührvorrichtung (18) vom Zellrad (7) über ein Getriebe (25) angetrieben ist, um die Rührvorrichtung (18) um einen größeren Winkelbetrag gegenüber dem Bewegungswinkel des Zellrades drehen zu lassen.

3. Portioniervorrichtung nach einem der vorhergehenden Ansprüche,
**dadurch gekennzeichnet, dass**
- das Zellrad (7) in einer entsprechenden, insbesondere zylindrischen, das Zellrad (7) radial eng umschließenden, Bohrung eines Zellradgehäuses (19) läuft, und/oder insbesondere
- die Schneide. (12) und/oder die als Gegenschneide wirkende Längskante der rückwärtigen Zellwand (13) so positioniert bzw. geformt ist, dass sich bei Drehung des Zellrades zwischen beiden ein ziehender Schnitt, mit Schnittrichtung insbesondere axial nach unten, ergibt.

4. Portioniervorrichtung nach einem der vorhergehenden Ansprüche,
**dadurch gekennzeichnet, dass**
- die Schneide (12) parallel zur Rotationsachse (44) angeordnet ist und die Längskante (14') windschief zur Rotationsachse (44) angeordnet ist, und/oder insbesondere
- die einzelnen Radzellen (17) windschief zur Rotationsachse (44), insbesondere von einer zur anderen Eintrittsfläche des Zellrades (7) verlaufende Durchgangsöffnungen (37) durch das Zellrad (7) sind, und/oder insbesondere
- das Zellrad (7) zwei einander gegenüberliegende Radzellen (17) aufweist, und/oder insbesondere.
- mit dem Zellrad (7) eine Rührvorrichtung (18) drehfest verbunden ist, von deren insbesondere vertikal stehender Welle aus in Querrichtung abstehende Rührarme (24) in das Schüttgut im Vorratsbehälter (2) hinein abstreben.

5. Portioniervorrichtung nach einem der vorhergehenden Ansprüche,
**dadurch gekennzeichnet, dass**
- der Vorratsbehälter (2) aus zwei nach unten konisch aufeinander zulaufenden sowie zwei parallel zueinander verlaufenden Seitenwänden besteht und die parallel zueinander verlaufenden Wände (27b) über das untere Ende des Vorratsbehälters (2) hinaus verlängert sind zur Schaffung eines Stellplatzes (3) unterhalb der Zellradschleuse (5) für ein Auffanggefäß (4), und/oder insbesondere
- unterhalb der Zellradschleuse (5) zwischen den beiden parallelen Wänden (27b) eine Positioniervorrichtung angeordnet ist, und/oder insbesondere
- die Positioniervorrichtung die Form einer Querplatte (28) mit entsprechender Ausnehmung (29) hat, die offen ist in Einschiebrichtung des Auffanggefäßes (4), und/oder insbesondere
- ein Portionierer mehrere in Reihe hintereinander angeordnete Portioniervorrichtungen (1) aufweist, von denen jeweils zwei benachbarte Portioniervorrichtungen zwischen sich eine gemeinsame der parallelen Wände (27b) aufweisen und die konisch aufeinander zulaufenden Wände (27a) über alle Portioniervorrichtungen (1) durchgehen.

6. Portioniervorrichtung nach Anspruch 5,
**dadurch gekennzeichnet, dass**
- ein oberer Deckel (26) über alle Portioniervorrichtungen (1) durchgeht, und/oder insbesondere
- das Volumen der Radzellen (17) verstellbar ist.

7. Verfahren zum Portionieren von Schüttgütern mit ungleichmäßiger Partikelgröße, -form und -gewicht mittels einer Zellradschleuse (5),
- wobei die Rotationsachse (44) der Zellradschleuse (5) aufrecht, im wesentlichen vertikal angeordnet ist
- wobei beim Füllen der Radzellen (17) die Schüttgut-Partikel zwischen der oberen Deckplatte (8) des Zellrades (7) und der Zellwand-Oberkante mittels einer Schneide (12) in Form wenigstens einer Schneide (12) abgeschert werden, und
- das Abscheren radial fortlaufend erfolgt,
**dadurch gekennzeichnet, dass**
das Abscheren radial fortlaufend an wenigstens zwei Abscherpunkten erfolgt.

8. Verfahren nach Anspruch 7,
**dadurch gekennzeichnet, dass**
- mittels der Drehung des Zellrades ein Durchmischen des Schüttgutes im Vorratsbehälter durchgeführt wird, jedoch bei einem separaten Durchmischen des Schüttgutes das Zellrad sich nicht bewegt, und/oder insbesondere
- vom Zellrad aus unter Anordnung eines Freilaufes eine darüber im Vorratsbehälter angeordnete Rührvorrichtung (18) angetrieben wird, und/oder insbesondere
- die Höhe, also axiale Erstreckung, des Zellrades und damit die Höhe der Radzellen vor dem Portionieren eingestellt wird.

## Claims

1. A portioning device (1) for a bulk material with uneven particle size, -shape and -weight, comprising:
- a holding container (2) with an outlet opening at the lower end;
- a placement position (3) for a receiving container (4) disposed there under;
- a portioning container (40) between the outlet opening of the holding container (2) and the placement position, which portioning container is configured as a rotary valve (5) and, in particular, movable and depleteable,
- wherein the rotation axis (44) of the rotary valve (5) is disposed horizontally, and
- wherein the rear functional edge (11') of the inlet opening (38) opposed to the direction of rotation of the valve rotor (7) in the rotary valve housing (19) is configured as a cutting edge (12) and runs with minimum clearance directly on the radial outside of the valve rotor (7),
- wherein the cutting edge (12) is configured as a blade that is attached separately.

2. A portioning device according to claim 1, wherein
- a stirring device (18) is provided in the holding container (2) and the stirring device (18) is driven by the valve rotor (7) through a transmission (25), in order to rotate the stirring device (18) by a larger angle value than the movement angle of the valve rotor.

3. A portioning device according to one of the preceding claims, wherein
- the valve rotor (7) runs in a respective, in particular cylindrical, bore hole of the rotating valve housing (19), which bore hole tightly encloses the valve rotor (7) in radial direction and/or, in particular,
- the cutting edge (12) and/or the longitudinal edge of the rear valve rotor opening wall (13) functioning as an opposite cutting edge is positioned or shaped, so that a sliding cut is achieved between both cutting edges when the valve rotor is rotated, which cut has a downward cutting direction in particular.

4. A portioning device according to one of the preceding claims, wherein
- the cutting edge (12) is disposed parallel to the rotation axis (44) and the longitudinal edge (14') is skewed relative to the rotation axis (44) and/or,
- the particular valve rotor openings (17) are disposed skewed relative to the rotation axis (44), in particular to a pass-through openings (37) extending through the valve rotor (7) from one entry surface of the valve rotor to the other entry surface and/or, in particular,
- the valve rotor (7) has two valve rotor openings (17), disposed opposite to one another, and/or
- a stirring device (18) is connected torque proof with the valve rotor (7), wherein stirring arms (24) protrude from the vertically disposed shaft of the stirring device (18) in transversal direction into the bulk material in the holding container (2).

5. A portioning device according to one of the preceding claims, wherein
- the holding container (2) is comprised of two side walls tapering conically downward towards one another and two side walls extending in parallel with one another, and the walls (27b) extending parallel to one another extend beyond the lower end of the holding container (2) in order to provide a placement position (3) below the rotating valve (5) for a receiving container (4) and/or, in particular,
- a positioning device is disposed below the rotating valve (5) between the two parallel walls (27b) and/or, in particular,
- the positioning device has the shape of a transversal plate (28) with a respective recess (29), which is open in insertion direction of the receiving container (4) and/or, in particular,
- a portioning unit comprises several portioning devices (1), wherein two respectively adjacent portioning devices comprise one of the parallel walls (27b) in common with one another, and the walls (27a) extending conically towards one another extend through all portioning devices (1).

6. A portioning device according to claim 5, wherein an upper cover (26) extends over all portioning devices (1), and/or, in particular, the volume of the valve rotor openings (17) is adjustable.

7. A method for portioning bulk materials with uneven particle size, -shape and - weight through a rotating valve (5),
- wherein the rotation axis (44) of the rotating valve (5) is disposed upright, essentially vertical;
- wherein during filling of the valve rotor openings (17) the bulk material particles are sheared between the upper cover plate (8) of the valve rotor (7) and the upper edge of the valve rotor opening wall through a cutting edge (12), configured in the form of at least one cutting edge (12); and
- the shearing is performed continuously in radial direction, wherein the shearing is performed continuously in radial direction at least at two shear-off points.

8. A method according to claim 7, wherein
- a mixing of the bulk material is performed in the holding container through rotating the valve rotor, however, the valve rotor does not rotate for a separate mixing of the bulk material and/or, in particular,
- a stirring device (18) disposed in the holding container above the valve rotor is driven by the valve rotor with a freewheeling clutch there between and/or, in particular,
- the height, thus the axial extension, of the valve rotor and thus the height of the valve openings is adjusted before portioning.

## Revendications

1. Dispositif de dosage (1) pour une matière en vrac de poids, formes et tailles de particule irrégulières avec
- un récipient réservoir (2) comprenant une ouverture de sortie à l'extrémité inférieure,
- un emplacement (3) placé en dessous pour un récipient de récupération (4),
- un récipient de dosage (40) entre l'ouverture de sortie du récipient réservoir (2) et l'emplacement sous forme d'un sas à roue cellulaire (5), le récipient étant particulièrement mobile et pouvant être vidé,
- l'axe de rotation (44) du sas à roue cellulaire (5) étant disposé horizontalement,
- le bord de fonction (11') arrière opposé au sens de rotation de la roue cellulaire (7), de l'ouverture d'entrée (38) étant réalisé dans le carter de roue cellulaire (19) comme un tranchant (12) et se déplaçant le plus possible sans jeu directement sur la face externe radiale de la roue cellulaire (7),
**caractérisé en ce que**
le tranchant (12) est réalisé comme une lame fixée séparément.

2. Dispositif de dosage selon la revendication 1,
- un dispositif agitateur (18) étant présent dans le récipient réservoir (2) et **caractérisé en ce que**
le dispositif agitateur (18) est entraîné par la roue cellulaire (7) au moyen d'un engrenage (25) pour faire tourner le dispositif agitateur (18) d'une ampleur angulaire plus importante par rapport à l'angle de déplacement de la roue cellulaire.

3. Dispositif de dosage selon l'une des revendications précédentes, **caractérisé en ce que**
la roue cellulaire (7) tourne dans un perçage d'un carter de roue cellulaire (19) cylindrique correspondant qui entoure radialement de manière étroite la roue cellulaire (7) et/ou en particulier
le tranchant (12) est positionné respectivement formé et/ou le bord longitudinal agissant comme contre-tranchant de la paroi cellulaire (13) arrière de sorte que lors de la rotation de la roue cellulaire entre les deux, il en résulte une coupe en tirant, dont la direction est en en particulier axiale vers le bas.

4. Dispositif de dosage selon l'une des revendications précédentes, **caractérisé en ce que**
- le tranchant (12) est disposé parallèle à l'axe de rotation (44) et le bord longitudinal (14') est disposé voilé par rapport à l'axe de rotation (44), et/ou en particulier,
- chacune des cellules de roue (17) est voilée par rapport à l'axe de rotation (44), en particulier ce sont des ouvertures de passage (37) s'étendant depuis l'une des surfaces d'entrée à l'autre de la roue cellulaire (7) à travers la roue cellulaire (7), et/ou en particulier
- la roue cellulaire (7) présente deux cellules de roue (17) mutuellement opposées et/ou en particulier
- un dispositif agitateur (18) est relié rigide en torsion à la roue cellulaire (7) depuis l'arbre en particulier vertical des bras agitateurs (24) s'étendant dans le sens transversal s'engagent dans la matière en vrac dans le récipient réservoir (2).

5. Dispositif de dosage selon l'une des revendications précédentes, **caractérisé en ce que**
- le récipient réservoir (2) se compose de deux parois latérales s'étendant parallèles entre elles ainsi que deux parois latérales allant coniquement l'une vers l'autre et les parois (27b) s'étendant parallèlement entre elles sont prolongées au delà de l'extrémité inférieure du récipient réservoir (2) pour la création d'un emplacement (3) en dessous du sas à roue cellulaire (5) pour un bac de récupération (4), et/ou en particulier
- en dessous du sas à roue cellulaire (5) entre les deux parois parallèles (27b), il est disposé un dispositif de dosage et/ou en particulier
- le dispositif de dosage a la forme d'une plaque transversale (28) avec un évidement correspondant (29) ouvert dans le sens d'insertion du bac de récupération (4), et/ou en particulier
- un doseur présente plusieurs dispositifs de dosage (1) disposés en série les uns derrière les autres dont respectivement deux dispositifs de dosage voisins présentent entre eux une des parois communes parallèles (27b) et traversent les parois se rapprochant coniquement (27a) par tous les dispositifs de dosage (1).

6. Dispositif de dosage selon la revendication 5, **caractérisé en ce qu'**un couvercle (26) traverse tous les dispositifs de dosage (1), et/ou en particulier
- le volume des cellules de roue (17) est réglable.

7. Procédé pour le dosage de matières en vrac de poids, forme et taille de particules irrégulières au moyen d'un sas à roue cellulaire (5),
- l'axe de rotation (44) du sas à roue cellulaire (5) étant disposé sensiblement verticalement,
- lors du remplissage des cellules de roue (17), les particules de matière en vrac entre la plaque supérieure de couverture (8) de la roue cellulaire (7) et du bord supérieur de paroi cellulaire sont cisaillées au moyen d'un tranchant (12) sous forme d'au moins un tranchant (12)
et
- le cisaillement s'effectuant radialement en continu,
**caractérisé en ce que**
le cisaillement s'effectue radialement en continu à au moins deux points de cisaillement.

8. Procédé selon la revendication 7, **caractérisé en ce qu'**
- au moyen de la rotation de la roue cellulaire, il est effectué un mélange de la matière en vrac dans le récipient réservoir, cependant lors d'un mélange séparé de la matière en vrac la roue cellulaire n'étant pas déplacée, et/ou en particulier,
- depuis la roue cellulaire en présence d'une roue libre, un dispositif agitateur (18) disposé dans le récipient réservoir est entrainé, et/ou en particulier
- la hauteur, donc l'extension axiale de la roue cellulaire et ainsi la hauteur des cellules de roue sont réglés avant le dosage.
